(19) Europäisches Patentamt

European Patent Office

Office européen des brevets

(11) Veröffentlichungsnummer: **0 267 514 B1**

(12) **EUROPÄISCHE PATENTSCHRIFT**

(45) Veröffentlichungstag der Patentschrift: **15.04.92**

(21) Anmeldenummer: **87116094.1**

(22) Anmeldetag: **02.11.87**

(51) Int. Cl.⁵: **H02K 5/15**

(54) **Druckringanordnung für ein Gestell mit eckiger Kontur für das Jochblechpaket einer gehäuselosen elektrischen Maschine.**

(30) Priorität: **13.11.86 DE 8630403 U**

(43) Veröffentlichungstag der Anmeldung:
**18.05.88 Patentblatt 88/20**

(45) Bekanntmachung des Hinweises auf die
Patenterteilung:
**15.04.92 Patentblatt 92/16**

(84) Benannte Vertragsstaaten:
**DE FR SE**

(56) Entgegenhaltungen:
**DE-C- 847 033**
**DE-U- 7 220 767**
**US-A- 3 064 152**

(73) Patentinhaber: **SIEMENS AKTIENGESELL-
SCHAFT**
**Wittelsbacherplatz 2**
**W-8000 München 2(DE)**

(72) Erfinder: **Auernhammer, Erich, Dipl.-Ing. (FH)**
**Schonhoverstrasse 17a**
**W-8500 Nürnberg(DE)**
Erfinder: **Dörfler, Otto, Dipl.-Ing. (FH)**
**Ahornstrasse 15**
**W-8502 Zirndorf(DE)**
Erfinder: **Schmiedel, Heinrich**
**Johann-Krieger-Strasse 17**
**W-8500 Nürnberg(DE)**

## Beschreibung

Die Erfindung betrifft eine Druckringanordnung für ein Gestell mit eckiger Kontur für das Jochblechpaket einer gehäuselosen elektrischen Maschine nach dem Oberbegriff des Anspruchs 1 oder 2.

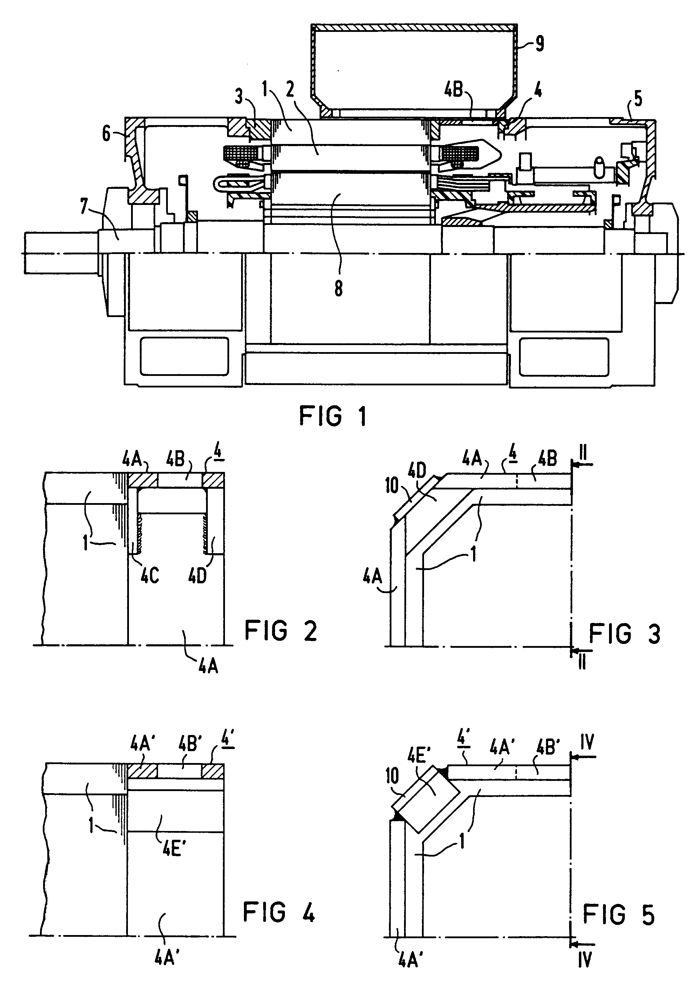

Eine bekannte Maschine der Anmelderin vom Typ 1GH5 ist im Halb-Längsschnitt in FIG 1 vereinfacht dargestellt. Sie enthält ein Jochblechpaket 1 mit bewickelten geblechten Polkörpern 2, ein bewickeltes Läuferblechpaket 8 samt Läuferwelle 7 sowie Lagerschilde 5 und 6, die an stirnseitigen Druckringanordnungen 3 und 4 von eckiger Kontur lösbar befestigt sind. Die besagten Druckringanordnungen 3 und 4 sind an den Ecken mittels längsachsparallelen, als Flachleisten ausgebildeten Längsleisten zu einem Gestell verschweißt, in dem das Jochblechpaket 1 von ebenfalls eckiger Kontur unter Druck zusammengehalten ist, wobei die Flachleisten mit dem Jochblechpaket verschweißt sind und das Gestell samt dem Jochblechpaket ein gesondertes Maschinengehäuse ersetzt.

Die antriebsseitige Druckringanordnung 3 besteht aus einem einteiligen Ring und die andere Druckringanordnung 4 aus einem zusammengesetzten rahmenartigen Körper mit einer Mantelfläche von eckiger Kontur und einem Durchlaß 4B auf dem einen ebenen Mantelabschnitt, der zusammen mit dem Jochblechpaket 1 einen lösbar befestigten Klemmenkasten 9 trägt, zu dem vom Maschineninneren über den Durchlaß 4B nicht dargestellte Verbindungsleiter an die ebenfalls nicht gezeigten Klemmen im Klemmenkasten 9 durchgeführt sind.

Die Druckringanordnung 4 besteht aus einem mehrteiligen Mantel von eckiger Kontur, dessen Mantelabschnitte an den abgewinkelten Enden von innen miteinander verschweißt sind.

Auf der dem Jochblechpaket zugewandten Stirnseite ist der Mantel mit einem einteiligen Flachring am Außenumfang verschweißt und weist an der anderen Seite im Bereich der abgewinkelten Umfangsabschnitte an der Innenseite anliegende angeschweißte Befestigungsstücke auf. Diese BS-seitige Druckringanordnung ist aus einer Vielzahl von Teilen von z.T. aufwendiger Form zusammengesetzt und weist entsprechend viele Schweißstellen auf, von denen die außenliegenden zur Schaffung glatter Außenflächen, insbes. im Bereich des Klemmenkastens, durch zeitraubende Nachbearbeitung geglättet werden müssen.

Der Erfindung liegt die Aufgabe zugrunde, eine wesentich einfachere BS-seitige Druckringanordnung zu schaffen, bei der weniger Teile von glatter Form ohne Nachbearbeitung von Schweißverbindungen zu einem außerordentlich stabilen Körper zusammengefügt sind.

Die Lösung der gestellten Aufgabe gelingt gemäß der Erfindung durch die kennzeichnenden Merkmale des Anspruchs 1 bzw. des Anspruchs 2.

Vorteilhafte Ausgestaltungen der Erfindung sind anhand von Beispielen dargestellt und näher erläutert.

Es zeigen die Fig. 2 und 3 ein erstes Ausführungsbeispiel in Draufsicht und im Längsschnitt eines Quadranten und die Fig. 4 und 5 in entsprechender Weise ein zweites Ausführungsbeispiel, bei dem eine noch geringere Zahl von Teilen einfacher Art ausreicht.

Die erfindungsgemäße Druckringanordnung nach Fig. 2 und 3 enthält vier ebene rechteckförmige Mantelabschnitte 4A mit abgeschrägten Kanten, von denen ein Mantelabschnitt mit einem rechteckförmigem Durchlaß 4B versehen ist.

Die Mantelabschnitte haben bei einer gleichzeitigen achteckigen Kontur der Druckringanordnung 4 einheitliche Abmessungen. Die im Winkel von jeweils 90° zueinander mit Abstand angeordneten Mantelabschnitte 4A werden durch jeweils zwei gleichflächige trapezförmige Verbindungsstücke 4C,4D zusammengehalten, die mit den Innenkanten ihrer Schrägflächen an den Innenseiten der Mantelabschnitte angeschweißt sind, wobei die jeweiligen Außenseiten der Verbindungsstücke bündig mit den Seitenkanten der Mantelabschnitte liegen. Die Außenparallelflächen beider Verbindungsstücke je Ecke liegen mit den schrägen Kanten der Mantelabschnitte jeweils in einer Ebene. Auf diesen schrägen Kanten ist an jeder Ecke eine Längsleiste 10 verschweißt, wobei die Längsleisten mit ihren Endabschnitten an den Außenparallelflächen beider Verbindungsstücke 4C,4D anliegen. Die gesamte Druckringanordnung 4 besteht demnach aus vier Mantelabschnitten und acht Verbindungsstücken.

In den Fig. 4 und 5 ist eine Druckringanordnung 4' gezeigt, die nur vier Verbindungsstücke benötigt und bei der einfachere Mantelabschnitte ohne Schrägkanten genügen.

Je Ecke sind die Mantelabschnitte 4A' mit einem quaderförmigem Verbindungsstück 4E' verschweißt, wobei die Schweißnähte im Seitenbereich der schmalen Kanten der Mantelabschnitte 4A' und der Verbindungsstücke 4E' so gelegt sind, daß sie die Endbereiche der Längsleisten 10 an deren Seitenkanten mit überdecken. Es ist bei dieser Anordnung also auch noch eine einfachere Verschweißung von außen her möglich, ohne daß die Schweißverbindungen an Flächen für den Anbau des Klemmenkastens, des Lagerschildes und des Jochblechpakets angebracht werden müssen.

## Patentansprüche

1.  Druckringanordnung für ein Gestell mit eckiger Kontur zur Aufnahme eines Jochblechpakets (1) einer gehäuselosen elektrischen Maschine, sowie zur Halterung von Lagerschilden (5,6) und eines am Umfang angeordneten Klemmenkastens (9), wobei das Gestell aus zwei stirnseitigen Druckringanordnungen (3,4) sowie mit diesen und dem Jochblechpaket (1) fest verbundenen Längsleisten (10) besteht, von denen zumindest die eine Druckringanordnung (4) eine mehrteilig zusammengesetzte Mantelfläche mit einer vom lösbar befestigten Klemmenkasten (9) überdeckten Durchlaß (4B,4B') für elektrische Verbindungsleiter von der Maschinenwicklung zum Klemmenkasten (9) enthält und der den Durchlaß (4B,4B') enthaltende Teil der Mantelfläche zur Befestigung des Klemmenkastens (9) mitbenutzt ist, **dadurch gekennzeichnet,** daß die eine Druckringanordnung (4) aus einzelnen ebenen Mantelabschnitten (4A) besteht, die endseitig im Abstand voneinander und im Winkel zueinander durch innenseitig angeschweißte Verbindungsstücke (4C,4D) zu der steifen Druckringanordnung verbunden sind, wobei zu beiden Seiten der Druckringanordnung (4) jeweils ebene Verbindungsstücke (4C,4D) angeschweißt sind und die Außenfläche der auf der freien Seite der Druckringanordnung liegenden Verbindungsstücke (4D) die Anschlußfläche für den Lagerschild (5) bildet und daß ein Mantelabschnitt den Durchlaß (4B) aufweist.

2. Druckringanordnung für ein Gestell mit eckiger Kontur zur Aufnahme eines Jochblechpakets (1) einer gehäuselosen elektrischen Maschine, sowie zur Halterung von Lagerschilden (5,6) und eines am Umfang angeordneten Klemmenkastens (9), wobei das Gestell aus zwei stirnseitigen Druckringanordnungen (3,4) sowie mit diesen und dem Jochblechpaket (1) fest verbundenen Längsleisten (10) besteht, von denen zumindest die eine Druckringanordnung (4) eine mehrteilig zusammengesetzte Mantelfläche mit einer vom lösbar befestigten Klemmenkasten (9) überdeckten Durchlaß (4B,4B') für elektrische Verbindungsleiter von der Maschinenwicklung zum Klemmenkasten (9) enthält und der den Durchlaß (4B,4B') enthaltende Teil der Mantelfläche zur Befestigung des Klemmenkastens (9) mitbenutzt ist, **dadurch gekennzeichnet,** daß die eine Druckringanordnung (4') aus einzelnen ebenen Mantelabschnitten (4A') besteht, die endseitig im Abstand voneinander und im Winkel zueinander durch innenseitig angeschweißte Verbindungsstücke (4E') zu der steifen Druckringanordnung (4') verbunden sind, wobei an jeder Ecke der Druckringanordnung (4') nur ein quaderförmiges Verbindungsstück (4E') vorgesehen ist und die auf der freien Seite der Druckringanordnung (4') liegenden Außenflächen der Verbindungsstücke (4E') die Anschlußfläche für den Lagerschild (5) bilden und daß ein Mantelabschnitt den Durchlaß (4B') aufweist.

3. Druckringanordnung nach Anspruch 1, **dadurch gekennzeichnet,** daß die ebenen rechteckförmigen Mantelabschnitte im Winkel von 90° jeweils mit zwei trapezförmigen ebenen Verbindungsstücken (4C,4D) innenseitig mit den Innenkanten der Schrägflächen der Verbindungsstücke verschweißt sind und an den freien Außenparallelflächen der jeweils in einer Ecke der Druckringanordnung liegenden Verbindungsstücke (4C,4D), die mit den parallelen Kanten der benachbarten Mantelabschnitte (4A) verschweißten Endabschnitten der Längsleisten (10) anliegen.

4. Druckringanordnung nach Anspruch 3, **dadurch gekennzeichnet,** daß die mit den Längsleisten (10) verschweißten Kanten der Mantelabschnitte (4A) abgeschrägt sind, so daß sie mit der Außenfläche der zugeordneten beiden trapezförmigen Verbindungsstücke (4C,4D) in einer Ebene liegen.

5. Druckringanordnung nach Anspruch 2, **dadurch gekennzeichnet,** daß die quaderförmigen Verbindungsstücke (4E') schräg zwischen zwei zueinander im Winkel liegenden Mantelabschnitten (4A') angeordnet und mit den Kanten der Mantelabschnitte sowie den Kanten der an ihnen jeweils anliegenden Längsleiste (10) verschweißt sind.

## Claims

1. Thrust collar arrangement for a frame with polygonal contour for the incorporation of a yoke lamination stack (1) of an electrical machine without a housing, as well as for holding bearing plates (5,6), and a connection box (9) arranged on the circumference, whereby the frame consists of two thrust collar arrangements (3,4) on the front side as well as longitudinal strips (10) firmly connected to these and to the yoke lamination stack (1), of which at least one thrust collar arrangement (4) contains a casing surface, composed of several parts, with an outlet (4B,4B'), covered by the releasably fastened connection box (9), for electrical connection leads from the machine winding to the connection box (9), and the part of the casing surface containing the outlet (4B,4B') is used jointly for the fastening of the connection box (9), characterized in that one thrust collar arrangement (4) consists of individual level casing sections (4A), which are combined, to form the rigid thrust collar arrangement, at the end side at a distance from one another and at an angle to one another by connection pieces (4C,4D) welded on the inside, whereby at both sides of the thrust collar arrangement (4) level connection pieces (4C,4D) are welded on in each case and the outer surface of the connection pieces (4D) lying on the free side of the thrust collar arrangement forms the attachment surface for the bearing plate (5) and in that a casing section has the outlet (4B).

2. Thrust collar arrangement for a frame with polygonal contour for the incorporation of a yoke lamination stack (1) of an electrical machine without a housing, as well as for holding bearing plates (5,6), and a connection box (9) arranged on the circumference, whereby the frame consists of two thrust collar arrangements (3,4) on the front side as well as longitudinal strips (10) firmly connected to these and to the yoke lamination stack (1), of which at least one thrust collar arrangement (4) contains a casing surface, composed of several parts, with an outlet (4B,4B'), covered by the releasably fastened connection box (9), for electrical connection leads from the machine winding to the connection box (9), and the part of the casing surface containing the outlet (4B,4B') is used jointly for the fastening of the connection box (9), characterized in that one thrust collar arrangement (4') consists of individual level casing sections (4A'), which are combined, to form the rigid thrust collar arrangement (4'), at the end side at a distance from one another and at an angle to one another by connection pieces (4E') welded on the inside, whereby at each corner of the thrust collar arrangement (4') only one square connection piece (4E') is provided and the outer surfaces of the connection pieces (4E'), lying on the free side of the thrust collar arrangement (4'), form the attachment surface for the bearing plate (5) and in that a casing section has the outlet (4B').

3. Thrust collar arrangement according to claim 1, characterized in that the level rectangular casing sections are welded at an angle of 90° in each case to two trapezoidal level connection pieces (4C,4D) on the inside to the inner edges of the inclined surfaces of the connection pieces and at the free outer parallel surfaces of the connection pieces (4C,4D) lying in each case in a corner of the thrust collar arrangement, which connection pieces abut, with the parallel edges of the adjacent casing sections (4A), welded end sections of the longitudinal strips (10).

4. Thrust collar arrangement according to claim 3, characterized in that the edges of the casing sections (4A) welded to the longitudinal strips (10) are bevelled so that they lie in one plane with the outer surface of the two associated trapezoidal connection pieces (4C,4D).

5. Thrust collar arrangement according to claim 2, characterized in that the square connection pieces (4E') are arranged inclined between two casing sections (4A') lying at an angle to one another and are welded to the edges of the casing sections as well as the edges of the longitudinal strip (10) resting against them respectively.

**Revendications**

1. Dispositif formant anneau de serrage pour un châssis possédant un contour polygonal servant à loger un paquet de tôles de culasse (1) d'une machine électrique sans carter, et à maintenir des flasques de palier (5,6) et une boîte à bornes (9) disposée sur le pourtour, et dans lequel le châssis est formé de deux dispositifs frontaux formant anneaux de serrage (3,4) ainsi que des barrettes longidudinales (10) raccordées de façon fixe à ces dispositifs et au paquet de tôles de culasse (1), et dans lequel au moins l'un (4) des dispositifs formant anneaux de serrage comporte une surface enveloppe formée par la réunion de plusieurs éléments et comprenant un passage (4B,4B') recouvert par la boîte à bornes (9) fixée de façon amovible, pour des conducteurs électriques de liaison raccordant le bobinage de la machine à la boîte à bornes (9) et la partie, qui contient le passage (4B,4B'), de la surface enveloppe est utilisée simultanément pour fixer la boîte à bornes (9), caractérisé par le fait qu'un dispositif formant anneau de serrage (4) est constitué par des sections planes individuelles (4A) de l'enveloppe, qui sont raccordées, au niveau de leurs extrémités, à distance l'une de l'autre et en faisant réciproquement un certain angle, par des éléments de liaison (4C,4D') soudés sur le coté intérieur, pour former le dispositif formant anneau de serrage rigide, et que respectivement des éléments plats de liaison (4C,4D) sont soudés des deux côtés du dispositif formant anneau de serrage (4) et la surface extérieure des éléments de liaison (4D), qui sont situés sur le côté libre du dispositif formant anneau de serrage, forme la surface de raccordement pour le flasque de palier (5), et qu'une section de l'enveloppe comporte le passage (4B).

2. Dispositif formant anneau de serrage pour un châssis possédant un contour polygonal servant à loger un paquet de tôles de culasse (1) d'une machine électrique sans carter, et à maintenir des flasques de palier (5,6) et une boîte à bornes (9) disposée sur le pourtour, et dans lequel le châssis est formé de deux dispositifs frontaux formant anneaux de serrage (3,4) ainsi que des barrettes longidudinales (10) raccordées de façon fixe à ces dispositifs et au paquet de tôles de culasse (1), et dans lequel au moins l'un (4) des dispositifs formant anneaux de serrage comporte une surface enveloppe formée par la réunion de plusieurs éléments et comprenant un passage (4B,4B') recouvert par la boîte à bornes (9) fixée de façon amovible, pour des conducteurs électriques de liaison raccordant le bobinage de la machine à la boîte à bornes (9) et la partie, qui contient le passage (4B,4B'), de la surface enveloppe est utilisée simultanément pour fixer la boîte à bornes (9), caractérisé par le fait qu'un dispositif formant anneau de serrage (4') est constitué par des sections individuelles planes d'enveloppe (4A'), qui sont réunies, au niveau de leurs extrémités à distance l'une de l'autre et en faisant un angle réciproque, par des éléments de liaison (4E') soudés sur le côté intérieur pour former le dispositif formant anneau de serrage rigide (4'), et que seul un élément de liaison parallélépipédique (4E') est prévu en chaque angle du dispositif formant anneau de serrage (4') et que les surfaces extérieures, situées sur le côté libre du dispositif formant anneau de serrage (4'), des éléments de liaison (4E') forment la surface de raccordement pour le flasque de palier (5), et qu une section d'enveloppe contient le passage (4B').

3. Dispositif formant anneau de serrage suivant la revendication 1, caractérisé par le fait que les sections planes rectangulaires d'enveloppe sont soudées, à un angle de 90°, respectivement par deux éléments de liaison plats trapézoïdaux (4C,4D), sur le côté intérieur, aux bords intérieurs des surfaces obliques des éléments de liaison et que les sections d'extrémité des barrettes longitudinales (10), qui sont soudées aux barres parallèles des sections voisines d'enveloppe (4A), s'appliquent sur les surfaces parallèles extérieures libres des éléments de liaison (4C,4D) situés respectivement dans un angle du dispositif formant anneau de serrage.

4. Dispositif formant anneau de serrage selon la revendication 3, caractérisé par le fait que les bords, soudés aux bords longitudinaux (10), des sections d'enveloppe (4A) sont biseautées de sorte qu'elles sont situées, avec la surface extérieure des deux éléments de liaison trapézoïdale associés (4C,4D), dans un plan.

5. Dispositif formant anneau de serrage suivant la revendication 2, caractérisé par le fait que les éléments de liaison parallélépipédiques (4E') sont disposés obliquement entre deux sections d'enveloppe (4A') qui font entre elles un angle et sont soudées aux bords des sections d'enveloppe ainsi qu'au bord de la barrette longitudinale (10) appliquée respectivement sur ces sections.

FIG 1

FIG 2

FIG 3

FIG 4

FIG 5